# EUROPEAN PATENT APPLICATION

(11) **EP 1 605 267 A2**
(43) Date of publication of application: **14.12.2005**
(21) Application number: 05253293.4
(22) Date of filing: 27.05.2005
(51) Int. Cl.: G01N 35/00, G01N 1/34, C12Q 1/68

(54) **Microarray washing apparatus and method**

(30) Priority: 08.06.2004 US 864229
(71) Applicant: Agilent Technologies, Inc., Palo Alto, CA 94306 (US)
(72) Inventor: Schleifer, Arthur, Portola Valle, California 94028 (US)
(74) Representative: Tollett, Ian

(57) **Abstract**

Apparatus for contacting an array substrate (126) with a fluid and novel methods for washing an array substrate (126) are disclosed. In an embodiment, the apparatus includes a housing defining a wash chamber (120), a fluid inlet (136) in fluid communication with the wash chamber (120), a drain (130) in fluid communication with the wash chamber (120), a gas inlet (148) adapted to direct a stream of gas over a surface of the array substrate (126), and a program controller (142) in operable relation to the wash chamber (120), the program controller (142) operable to perform a washing protocol which includes automatically filling the wash chamber (120) with said fluid. A method as described includes placing the array substrate (126) in a wash chamber (120), triggering a first drain and fill step, automatically performing a second drain and fill step, and automatically performing a slow drain step.

## Description

The invention relates generally to biomolecules bound in array format to an insoluble substrate surface, which are typically useful in large-scale screening assays, such as arrays of DNA samples to be used in DNA hybridization assays for genetic research and diagnostic applications. More specifically, the invention relates to methods and apparatus for washing microarrays.

Biomolecules, such as peptides or oligonucleotides, immobilized on planar array substrates are increasingly useful as diagnostic or screening tools. Such "microarrays" include regions of usually different biomolecules arranged in a predetermined configuration on the array substrate. These regions (sometimes referenced as "features" or "spots") are positioned at respective locations ("addresses") on the array substrate. Such microarrays can be fabricated by depositing previously obtained biomolecules onto a surface of an array substrate, or by *in situ* synthesis of the biomolecule on the surface of the array substrate. The microarrays, when exposed to a sample, will exhibit an observed binding pattern. This binding pattern can be detected upon interrogating or imaging the microarray. Data obtained from the interrogation or imaging process are then analyzed to determine information about the sample. For example, all polynucleotide targets (e.g. DNA) in a sample can be labeled with a suitable label (such as a fluorescent compound) to provide a suitable binding signal during the interrogation or imaging process, and the labeled sample can then be assayed using an oligonucleotide microarray. Following exposure to the labeled sample, the fluorescence pattern on the microarray can be accurately observed. Assuming that the different sequence oligonucleotides were correctly deposited in accordance with the predetermined configuration, then the observed binding pattern will be indicative of the presence and/or concentration of one or more polynucleotide components of the sample.

In use, the microarray is typically placed in a hybridization chamber in contact with the sample solution to allow binding to occur between analyte molecules in the sample and the biomolecules bound to the substrate. After the binding reaction has occurred, the surface of the array substrate of the microarray is washed to remove excess sample solution and to remove non-specifically bound material from the surface. The surface of the microarray may be washed by flushing the hybridization chamber with a wash buffer. The volume of sample solution retained in the hybridization chamber is usually very small, and the hybridization chamber accommodates this low volume to perform the binding reaction (the "hybridization"). The volume of sample solution retained in the hybridization chamber in typical systems ranges from about sixty to about a few hundred microliters. The small volume of the hybridization chamber renders it difficult to efficiently wash the microarray, due to the small dimensions inherent with such small volumes. Hybridization chambers that have an inlet and outlet and flow the solutions through the chamber, are particularly difficult to wash efficiently. This problem may be noticed on microarrays during the detection step, which typically reveals that there are regions of the microarray, typically near the edges, that are not washed as well as the center of the microarray. Small bubbles can form during the process, which are difficult to remove due to the small height dimension of the chamber. The bubbles are also detectable during the detection or reading of the array data and can result in incorrect or missing data.

In certain kinds of microarray systems, the hybridization chamber may be disassembled to remove the microarray, allowing more ready access to the microarray surface for the washing or subsequent steps. In some examples of such microarray systems, the array substrate itself forms a portion of the hybridization chamber. In one such example, the array substrate mates to a corresponding coverplate and gasket to result in formation of a fluid containment space adapted to retain a fluid sample in contact with microarray surface. Another example is a coverslip, where the fluid is retained between the coverslip and the array surface.

Although the process of disassembling the hybridization chamber permits ready access to the microarray surface, the handling of the array substrate that is required may result in poor or inconsistent results due to a number of factors. Such factors include poor technique or lack of skill by the person handling the array substrate (e.g. resulting in damage to the surface of the array substrate),variables in handling and subsequent treatment of the array substrate, or other factors. The process typically requires manually disassembling the hybridization chamber and then manually handling the array substrate through various washing and drying steps, requiring dexterity and skill by the user. The disassembly of the hybridization chamber is typically performed while the hybridization chamber is submerged in a wash solution in a bath. This manual disassembly procedure can cause several types of artifacts that interfere with the final measurement. Typical artifacts include fingerprints, scratches, and contamination from rubber gloves that are transferred to the surface of the array substrate. Typically, a number of array substrates are placed in racks that are then transferred from one bath to the next. A bath is typically used for the disassembly of several hybridization chambers in succession before refreshing the wash solution in the bath, allowing possible contamination of subsequent batches of microarrays. For example, the last hybridization chamber that is submerged during disassembly in a given bath will get exposed to the hybridization buffers from previously opened hybridization chambers, thereby exposing the microarrays to potential cross contamination. The extent of the cross contamination depends on how many hybridization chambers have been opened and the volume of the bath. In addition, significant amounts of wash solutions from earlier baths in the process can get transferred from one wash container to the next wash container in the process. This can introduce inconsistencies, noise and signal background into the analyses, especially in cases for which the wash conditions must be carefully controlled.

After the washing process, the surface of the array substrate needs to be dried. Two methods used to dry the array are, 1) placing the rack in a centrifuge to spin dry the slides, or 2) using a nitrogen gun to blow the surface dry. Centrifuging the arrays has problems in that there is sufficient time for artifacts, such as residues or streaks, to dry on the array substrate surface before they are removed. The rack used to hold the array substrates also retains liquid where the rack touches the array substrate, and again, residues such as streaks, residues, or other artifacts can form on the surface. The nitrogen gun method requires the user to remove the array substrate from the wash container, typically while the user is wearing rubber gloves. The user has to hold onto the microarray while blowing the nitrogen, and where the microarray is being touched, the liquid is difficult to remove. Any liquid that is not removed from the surface of the array substrate and that is allowed to dry can cause uneven signal background and lead to inconsistent results.

As described here, one can see that the operator has to touch and manipulate the array substrate many times. Each step when handled can cause artifacts and/or damage to the array substrate. The technique for each of the steps is dependant on the experience and the dexterity of the user.

What is needed is a system for washing and drying microarrays that allows decreased handling by the user and improves consistency of conditions under which the washing occurs.

The invention seeks to address the aforementioned deficiencies in the art, and provides a novel apparatus for contacting an array substrate with a fluid and novel methods for washing an array substrate. In an embodiment, the apparatus includes a housing defining a wash chamber, a fluid inlet in fluid communication with the wash chamber, a drain in fluid communication with the wash chamber, a gas inlet adapted to direct a stream of gas over a surface of the array substrate, and a program controller in operable relation to the wash chamber, the program controller operable to perform a washing protocol which includes automatically filling the wash chamber with said fluid.

In a preferred embodiment the drain comprises at least two fluid outlets of different size, wherein each fluid outlet is in operable relation to a drain control element.

Preferably the apparatus comprises at least two fluid inlets, and more preferably three fluid inlets, in fluid communication with the chamber, each fluid inlet adapted to be in fluid communication with a fluid source.

Preferably, there is provided a temperature control element, wherein the temperature control element comprises a temperature modulating means adapted to modulate the temperature of said fluid.

The temperature modulating means may be adapted to modulate the temperature of the housing, thereby modulating the temperature of said fluid in the wash chamber.

In a preferred embodiment the apparatus further comprises a fluid delivery conduit in fluid communication with the fluid inlet and a fluid reservoir in fluid communication with the fluid inlet, wherein the housing comprises a thermal insulator, and wherein the temperature control element comprises a temperature modulating means operably associated with one or more of the group consisting of the fluid delivery conduit and the fluid reservoir.

The temperature control element may further comprise a temperature sensor and a feedback control loop in operable relation to the temperature modulating means.

The wash chamber is preferably shaped to slope down to the drain.

The drain may comprise a grate for supporting said array substrate and may comprise multiple fluid outlets disposed along the grate.

Methods of washing an array substrate are also disclosed. One such method includes placing the array substrate in a wash chamber, triggering a first drain and fill step, automatically performing a second drain and fill step, and automatically performing a slow drain step.

In one embodiment, placing the array substrate comprises placing a hybridization chamber in the wash chamber and then disassembling the hybridization chamber, the hybridization chamber has a retained fluid in contact with the array substrate, and disassembling the hybridization chamber in diluting the retained fluid into the first wash solution by a factor of at least 100.

The array substrate may comprise a plurality of microarrays.

In one embodiment, triggering comprises providing a triggering signal to a program controller and the program controller is responsive to user input to select parameters of operation.

Preferably, the first drain and fill step and/or the second drain and fill step takes less than about 6 seconds to complete, and more preferably less than about 4 seconds to complete.

Preferably, there are provided a first wash solution and a second wash solution.
These may be the same.

The array substrate may be incubated under controlled conditions, which may comprise stringent wash conditions.

The slow drain step preferably takes at least about 4 seconds and at most about 100 seconds, and more preferably at least about 5 seconds and at most about 75 seconds.

Additional objects, advantages, and novel features of this invention shall be set forth in part in the descriptions and embodiments that follow and in part will become apparent to those skilled in the art upon examination of the following specification or may be learned by the practice of the invention. The objects and advantages of the invention may be realized and attained by means of the instruments, combinations, compositions and methods particularly pointed out herein and in the appended claims.

These and other features of the invention will be understood from the description of representative embodiments of the method herein described by way of example only, and the disclosure of illustrative apparatus for carrying out the method, taken together with the Figures, wherein

Figure 1 schematically illustrates an embodiment in accordance with the invention.

Figure 2 depicts an apparatus for use in conjunction with a method in accordance with the invention.

Figure 3 depicts an embodiment of a method in accordance with the present invention.

To facilitate understanding, identical reference numerals have been used, where practical, to designate corresponding elements that are common to the Figures. Figure components are not drawn to scale.

Before the invention is described in detail, it is to be understood that unless otherwise indicated this invention is not limited to particular materials, reagents, reaction materials, manufacturing processes, or the like, as such may vary. It is also to be understood that the terminology used herein is for purposes of describing particular embodiments only, and is not intended to be limiting. It is also possible in the present invention that steps may be executed in different sequence where this is logically possible. However, the sequence described below is preferred.

It must be noted that, as used in the specification and the appended claims, the singular forms "a," "an" and "the" include plural referents unless the context clearly dictates otherwise. Thus, for example, reference to "a fluid inlet" includes a plurality of fluid inlets. In this specification and in the claims that follow, reference will be made to a number of terms that shall be defined to have the following meanings unless a contrary intention is apparent.

"Biomolecule" refers to molecules generally derivable from living organisms, or analogues thereof. Biomolecules include, e.g. amino acids, oligopeptides, polypeptides, nucleotide monomers, oligonucleotides, polynucleotides, saccharides, polysaccharides, hormones, growth factors, peptidoglycans, or the like. An oligopeptide generally is a molecule having from two to about one hundred amino acid subunits bonded together. Polypeptide references a molecule having at least two amino acid subunits up to about a thousand amino acid subunits (or more) bonded together. An oligonucleotide generally is a molecule having from two to about one hundred nucleotide subunits bonded together. Polynucleotide references a molecule having at least two nucleotide subunits up to about a thousand nucleotide subunits (or more) bonded together.

A "microarray", unless a contrary intention appears, includes any one, two or three dimensional arrangement of addressable regions ("spots") bearing a particular chemical moiety or moieties (for example, polynucleotide sequences) associated with that region. A "bioarray" is a microarray of biomolecules. A microarray is "addressable" in that it has multiple regions of different moieties (for example, different polynucleotide sequences) such that a region (a "feature" or "spot" of the microarray) at a particular predetermined location (an "address") on an array substrate will detect a particular target or class of targets (although a feature may incidentally detect non-targets of that feature). In the case of a microarray, the "target" will be referenced as a moiety in a mobile phase (typically fluid), to be detected by probes ("target probes") which are bound to the array substrate at the various regions. However, either of the "target" or "target probes" may be the one which is to be evaluated by the other (thus, either one could be an unknown mixture of polynucleotides to be evaluated by binding with the other). While probes and targets of the present invention will typically be single-stranded, this is not essential. An "array substrate" is a solid support having a surface on which the features, or spots, of the microarray are disposed. Glass slides are frequently used as the solid support when a transparent array substrate is desired, although other materials may also be used for the array substrate, such as silica or plastic.

The term "stringent wash conditions" as used herein refers to conditions that are compatible to produce binding pairs of probes and targets, e.g. complementary nucleic acids, having a desired level of binding specificity in the assay while being incompatible to the formation of binding pairs between binding members which do not have the desired level of binding specificity. Stringent wash conditions typically are those wash conditions which result in removal of targets from the microarray which do not have a desired level of binding specificity. "Stringent wash conditions" in the context of hybridization to polynucleotide microarrays (e.g., as microarrays having "spots" that have DNA or RNA) are sequence dependent, and are different under different experimental parameters. Stringent wash conditions that can be used with polynucleotide microarrays within the scope of the invention can include, e.g., contacting the microarray with a wash solution of 0.2x SSC and 0.1% SDS at 65°C. Other exemplary stringent wash conditions include washing the microarray in a wash solution having 1x SSC at 45°C. Alternatively, washing in 0.1x SSC/0.1% SDS at 68°C can be employed. Alternative but comparable hybridization and wash conditions can be utilized to provide conditions of similar stringency. The stringency of a wash solution will vary with such factors as ionic strength, pH, detergent concentration, buffer composition, presence/ concentration of chaotropic agents (such as guanidinium chloride), and temperature. The stringency of wash conditions may be adjusted to result in a desired level of specificity of binding. The desired level of specificity is typically selected to provide an adequate signal-to-noise ratio such that meaningful data may be obtained from the microarray hybridization experiment. Typical stringent wash conditions used to identify nucleic acids may include, e.g.: a salt concentration of about 0.02 molar at pH 7 and a temperature of at least about 50°C or about 55°C to about 60°C; or, a salt concentration of about 0.1 M NaCl at 72°C for about 15 minutes; or, a salt concentration of about 0.2x SSC at a temperature of at least about 50°C or about 55°C to about 60°C for about 15 to about 20 minutes; or, the hybridization complex is washed twice with a solution with a salt concentration of about 2x SSC containing 0.1% SDS at room temperature for 15 minutes and then washed twice by 0.1x SSC containing 0.1% SDS at 68°C for 15 minutes; or, equivalent conditions. Stringent wash conditions can also be, e.g., 0.2x SSC/0.1% SDS at 42°C. In instances wherein the nucleic acid molecules are deoxyoligonucleotides ("oligos"), stringent conditions can include washing in 6x SSC/0.05% sodium pyrophosphate at 37°C (for 14-base oligos), 48°C (for 17-base oligos), 55°C (for 20-base oligos), and 60°C (for 23-base oligos). For detailed descriptions of equilvalent hybridization and wash conditions and for reagents and buffers, e.g., SSC buffers and equivalent reagents and conditions, see Ausubel, et al., Short Protocols in Molecular Biology, 3rd ed., Wiley & Sons 1995; Sambrook et al., Molecular Cloning: A Laboratory Manual, Third Edition, Cold Spring Harbor, N.Y., 2001; and Tijssen, Hybridization with Nucleic Acid Probes, Parts I and II, Elsevier, Amsterdam, 1993.

Stringent wash conditions are wash conditions that are at least as stringent as the above representative conditions. A given set of conditions are considered to be at least as stringent as the above representative conditions if interrogation of the microarray washed under the given set of conditions provides results that are substantially similar as compared to results obtained using the above representative conditions, where by "substantially similar" is meant within a factor of five, typically within a factor of three. Other stringent wash conditions are known in the art and may also be employed, as appropriate.

The term "predetermined" refers to an element whose identity or composition is known prior to its use. For example, a "predetermined temperature" is a temperature that is specified as a given temperature prior to use. An element may be known by name, sequence, molecular weight, its function, or any other attribute or identifier. As used herein, "automatic", automatically", or other like term references a process or series of steps that occurs without further intervention by the user, typically as a result of a triggering event provided or performed by the user. The automatic process typically involves an apparatus adapted to perform the steps of the process once the triggering event occurs; any apparatus adapted to perform the steps of the automated process may be used. Terms such as "first", "second", "third", etc. are used herein as terms of designation, and do not necessarily imply a temporal order of use, e.g. first wash solution, second wash solution, third wash solution, etc., such that the wash solutions may be used in any predetermined order without regard to their term of designation. In certain embodiments, the use of one of the wash solutions may indicate use of one of the other wash solutions, e.g. in some embodiments, the third wash solution may be the same as the first wash solution, i.e. in some embodiments, the first wash solution may be used where the third wash solution is indicated. Another way of describing such embodiments is that the composition of one of the wash solutions is the same as another one of the wash solutions, e.g. that the composition of the third solution is the same as the composition of the first wash solution. This may simplify equipment used in performing methods in accordance with the present invention in that the total number of different solutions needed to contact the array substrate may be fewer than the number of solutions indicated, due to some of the wash solutions being used in more than one step.

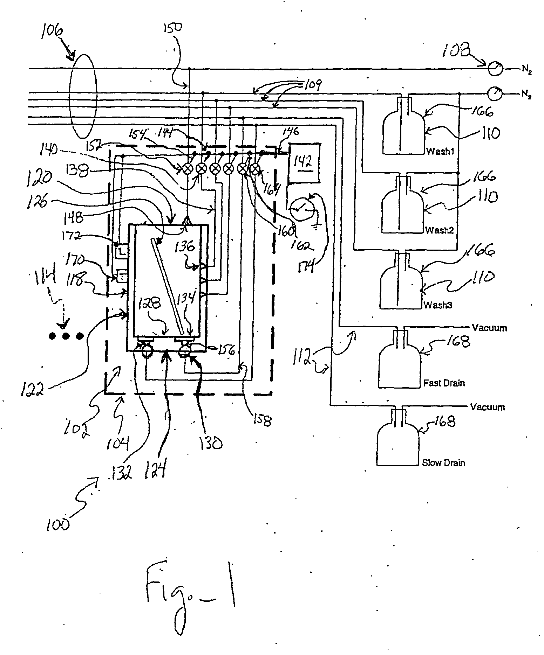

Now embodiments of the invention are described with reference to the figures, wherein Figure 1 is a schematic drawing of an apparatus according to the present invention. The apparatus as illustrated is a washing system 100 that includes a washing station 102 (enclosed in the dashed rectangle 104 in Figure 1), operably associated with a system manifold 106. The system manifold 106 includes a gas source 108, one or more fluid supply lines 109 in fluid communication with fluid sources 110 (e.g. sources of wash solution(s)), and one or more drain waste lines 112. As illustrated in Figure 1, only one washing station 102 is shown, although many other (e.g. up to 10, up to 20, up to 30 or more) washing stations 102 may also be operably associated with the system manifold 106, as indicated by the ellipsis 114 in Figure 1. The description for the single illustrated washing station 102 shown will typically also apply to additional washing stations 102.

The washing station 102 includes a housing 118 defining a wash chamber 120. In the embodiment illustrated in Figure 1, the housing 118 has one or more side walls 122 joined to a base 124 to define the wash chamber 120. The wash chamber 120 is adapted to receive and hold an array substrate 126 such that all or a substantial portion of the array substrate 126 may be submerged in a fluid in the wash chamber. In this context, a "substantial portion of the array substrate" is at least enough of the array substrate such that at least 80% of the spots of a microarray on the array substrate may be submerged in a fluid in the wash chamber; i.e. at least a portion of the array substrate may remain un-submerged. In typical use of the wash chamber, at least 90%, or at least 98%, or about 100% of the spots of a microarray on the array substrate are submerged in a fluid in the wash chamber (when the wash chamber is filled with fluid). In typical embodiments, the wash chamber 120 has a bottom 128 that is sloped down to a drain 130, providing for removing most (e.g. at least about 90%, or at least about 95%) or substantially all (e.g. at least about 98%, or about 100%) of fluid in the wash chamber 120. In certain embodiments, the housing 118 includes a support structure 134 on which the array substrate 126 sits. This support structure may take the form of a grate at the bottom 128 of the wash chamber 120 that maintains the array substrate 126 above the drain.

The wash chamber 120 is in fluid communication with a fluid inlet 136. The fluid inlet 136 is in fluid communication with a fluid conduit 138, which is in fluid communication with the fluid supply line 109 of the system manifold 106. A fluid inlet control element 140 is in operable relation with the fluid inlet 136. The fluid inlet control element 140 is adapted to control delivery of fluid to the wash chamber 120. The fluid inlet control element 140 typically is controlled by a program controller 142, e.g. via a function control line 144 operably connecting the program controller 142 and the fluid inlet control element 140. As shown in Figure 1, a bus line 146 from the program controller 142 includes the function control lines 144. The fluid inlet control element 140 typically comprises a valve, the function of which is controlled by the program controller 142. In typical embodiments, the fluid inlet 136 is adapted to spray fluid onto the surface of the array substrate. In some embodiments, the fluid inlet 136 is adapted to also spray fluid onto the interior surface of the wash chamber 120. In an embodiment, a fluid inlet 136 is disposed above the wash chamber 120 and is directed into the wash chamber 120. In some embodiments, there may be more than one fluid inlet 136 (e.g. two, three, four, five, or more fluid inlets), and each fluid inlet 136 may be in operable relation with its own fluid inlet control element 140. The embodiment illustrated in Figure 1 has three fluid inlets 136, each in fluid communication with a corresponding fluid source 110 via the system manifold 106. In particular embodiments, the fluid inlet control element 140 includes an inlet manifold adapted to receive fluid from a plurality of fluid sources and direct fluid from at least one of the fluid sources to the fluid inlet 136; in certain such embodiments, the inlet manifold comprises a plurality of valves in operable relation to the program controller 142 such that the program controller 142 controls the inlet manifold.

The wash chamber 120 is in fluid communication with a gas inlet 148, which is in fluid communication with a gas source of the system manifold 106 via a gas conduit 150. A gas inlet control element 152 is in operable relation to the gas inlet 148. The gas inlet control element 152 is adapted to control delivery of gas to the wash chamber 120. The gas inlet control element 152 typically comprises a valve, which may be controlled by the program controller 142 via a function control line 154 operably connecting the program controller 142 to the gas inlet control element 152. In certain embodiments, the valve may be adjustable by the user to regulate the flow of gas into the wash chamber; in such embodiment, additional control by the program controller may optionally be present. The gas inlet control element 152 typically includes any device or components which meet the functional requirements of controlling or adjusting the gas flow to the wash chamber 120. In typical embodiments, the gas inlet 148 is adapted to direct a stream of gas (e.g. an inert, dry gas such as dry nitrogen gas) from the gas inlet 148 across the surface of the array substrate 126 to assist in reducing or eliminating the amount of fluid that remains on the surface of the array substrate 126. In addition to aiding in drying the surface of the array substrate, the gas inlet may provide a flow of gas that maintains a positive pressure of the inert gas to reduce environmental contamination of the array substrate. For example, airborne contaminants would tend to be reduced around the array substrate during use as long as the relatively inert gas flowing from the gas inlet maintained a positive pressure in the wash chamber.

The wash chamber is in fluid communication with a drain 130. The drain 130 includes a fluid outlet 156 in fluid communication with a drain conduit 158, which is in fluid communication with a drain waste line 112 of the system manifold 106. A drain control element 160 is in operable relation to the drain 130. The drain control element 160 is adapted to control removal of fluid from the wash chamber 120 via the fluid outlet 156 and the drain conduit 158. The drain control element 160 typically is controlled by a program controller 142, e.g. via a function control line 162 operably connecting the program controller 142 and the drain control element 160. The drain control element 160 typically comprises a valve whose operation is controlled by the program controller 142. In certain embodiments, the drain comprises two fluid outlets 132, 156, each having a drain control element 160, 164 comprising a valve operably associated therewith. In certain embodiments, a series of fluid outlets are located along bottom of the wash chamber in fluid communication with a drain conduit; the fluid outlets are arranged to be adjacent the base of the array substrate during use of the wash chamber.

In some embodiments, the apparatus provides for varying the rate of fluid removal from the wash chamber such that there are at least two different rates of fluid removal from the wash chamber under normal operation. This may be accomplished in any suitable manner; in one typical example, the drain control element is adapted to allowing varying rates of fluid removal from the chamber, e.g. the drain control element includes a variable speed pump which is adapted to pump fluid from the wash chamber at controlled rates. As another example, the drain may comprise two different size drain conduits, one drain conduit having a relatively smaller diameter (or cross sectional area) to restrict the flow rate through the drain conduit, and the other having a relatively larger diameter (or cross sectional area) that provides for relatively unrestricted flow as compared to the relatively smaller diameter drain conduit. In another embodiment, a flow restrictor may be present in a first drain conduit to restrict the flow rate, while a second drain conduit does not have a flow restrictor. A low flow rate through a drain conduit provides for a low rate of fluid removal, i.e. a slow draining of the wash chamber. The drain conduit with a relatively larger diameter provides for a relatively high rate of fluid removal. The drain control element 160 typically includes any device or components which meet the functional requirements of controlling or adjusting the fluid flow out of the wash chamber 120.

As noted above, the washing system 100 may include a plurality of washing stations 102, each operably associated with the system manifold 106. The system manifold 106 includes a gas source 108, one or more fluid supply lines 109 in fluid communication with fluid sources 110 (e.g. sources of wash solution(s)), and one or more drain waste lines 112. The system manifold illustrated in Figure 1 includes three fluid sources 110; each of the fluid sources 110 is shown as a pressure driven source, although any suitable means for delivering fluid to the washing chamber(s) may be employed in an apparatus of the present invention. Each fluid source 110 includes a reservoir 166; typically each reservoir 166 will contain a different wash solution during operation of the washing system. Also pictured in Figure 1 are one or more effluent reservoirs 168 which receive fluid removed from the wash chamber 120. As illustrated in Figure 1, the fluid outlets 132, 156 (e.g. providing for a fast drain rate and a slow drain rate) each have separate effluent reservoirs 168. In an embodiment having a pumping system to control the drain rate for fast and slow drain rates, only one drain fluid path is required.

In certain embodiments the washing system 100 includes one or more temperature control elements (not shown) operable to control the temperature of fluid in the washing system during use. Examples of temperature control elements include temperature sensors 170 and temperature modulating means (e.g. heating means and/or cooling means). In certain embodiments the washing system includes one or more temperature sensors (e.g. shown at 170 operably associated with the wash chamber). The temperature sensors may be located wherever it is necessary to control and/or monitor the temperature, e.g. a temperature sensor may be disposed at one or more of a fluid reservoir 166, a fluid supply line 109, a fluid conduit 138, and the wash chamber 120. The temperature control elements typically are in operable relation to the program controller. Temperature modulating means (e.g. heating means and/or cooling means) may also be included in the washing system 100 wherever necessary, and typically will be disposed at one or more of a fluid reservoir 166, a fluid supply line 109, a fluid conduit 138, and the wash chamber 120. Any temperature modulating means (e.g. heating means and/or cooling means) operable to heat and/or cool a portion of the washing system (or fluid in the washing system) may be present. In a particular embodiment, a heating means may be located at or adjacent the housing to heat fluid in the wash chamber. In a particular embodiment, a cooling means may be located at or adjacent the housing to cool fluid in the wash chamber. Locations for temperature modulating means (e.g. heating means and/or cooling means) and temperature sensors will be determined primarily by design and operational considerations for the given washing system. In particular embodiments, the temperature sensor and the temperature modulating means (e.g. heating means and/or cooling means) are operably associated with a feedback control loop to control temperature of a portion of the washing system.

In certain embodiments, the program controller 142 also controls temperature of the fluid source(s) 110; in such embodiments, the program controller 142 is in communication with the temperature sensors and the temperature modulating means (e.g. heating means and/or cooling means). In such embodiments, the program controller 142 is adapted to receive a signal related to the temperature from a temperature sensor and to respond accordingly by controlling the temperature modulating means (e.g. heating means and/or cooling means). In operation, this allows delivery of a temperature controlled (e.g. preheated or precooled) wash solution from a fluid source 110 to the wash chamber 120. In another embodiment, the heating means is disposed outside the housing 118 and outside the wash chamber 120, e.g. along the fluid conduit 138 and/or along the fluid supply lines 109.

The temperature control allows control of more variables in the washing process to give better consistency of results from the washing process. In certain embodiments, the housing 118 comprises a thermally insulative material. Temperature control of the wash chamber in such embodiments may be achieved by controlling the temperature of the fluid entering the wash chamber. Any suitable insulative material which thermally insulates the wash chamber may be used.

In some embodiments, one or more fluid level sensors 172 are operably associated with the washing chamber 120. One fluid level sensor 172 may be adapted to detect when the wash chamber 120 is full (e.g. a "high fluid level" sensor) or substantially full (e.g. at least about 90% of the "full" fluid level). Similarly, another fluid level sensor 172 may be adapted to detect when the wash chamber 120 is substantially empty (e.g. a "low fluid level sensor" that detects when the fluid level is less than about 10% of the "full" fluid level). In this context, "full" means the typical level of fluid required for use of the washing station 102, e.g. the fluid level necessary to submerge all or a substantial portion of the array substrate 126. These fluid level sensors 172 are typically in electrical communication with the program controller 142 for use in controlling the washing process.

The washing system 100 includes a program controller 142 in operable relation to the washing station 102, typically via a bus line 146 that includes the function control lines 144, 154, 162. In operation, function control lines 144 communicate signals between the program controller 142 and elements that communicate with or are controlled by the program controller 142, e.g. fluid inlet control elements 140, drain control elements 160, temperature control elements. The program controller 142 is adapted to automatically control the washing process. The program controller 142 typically includes a microprocessor and an interface for receiving or sending signals communicated along function control lines 144, 154, 162. Any other apparatus or combination of components that performs the function of the program controller 142 as described herein may be used as the program controller 142.

Typically, the program controller 142 is preprogrammed to conduct a specified washing protocol. In particular embodiments, the program controller 142 includes a menu function that allows the user to choose from a number of preprogrammed washing protocols. In certain embodiments, the program controller 142 is programmable by the user to provide for user defined washing protocols.

The program controller 142 provides for automatic operation of the washing system 100 to conduct a preprogrammed washing protocol for washing an array substrate 126 as described herein. The washing protocol typically includes one or more drain and fill steps followed by a slow drain step, although any desired washing protocol which can be programmed into the program controller may be used. The washing protocol may specify predetermined delay periods or incubations, predetermined temperatures for washing solutions or washing steps, predetermined rates for draining and/or filling the wash chamber, and/or predetermined selection from one or more wash solutions, as well as other characteristics apparent from the description herein or from routine use of the washing system 100. In embodiments having a plurality of washing stations 102, the program controller 142 typically can control each washing station 102 independently, potentially following the same or different washing protocols for array substrates at each washing station 102.

In some embodiments, a trigger is disposed in operable relation to the program controller 142. The trigger may be a switch 174 (as shown in Figure 1) or other device that may be activated by the user to indicate that the array substrate has been placed in the wash chamber and that the washing process may begin. Upon activation by the user (e.g. depressing a pushbutton switch 174), a trigger signal is provided to the program controller 142 that results in the start of washing the array substrate 126 as disclosed herein. In another embodiment, a sensor disposed in or adjacent the wash chamber 120 detects an array substrate being placed in the wash chamber 120 and provides an appropriate trigger signal to the program controller 142. In certain embodiments, there is a delay between the trigger signal being provided to the program controller 142 and the start of the washing process. In another embodiment, a cover or lid is provided for covering the wash chamber 120 during use. In some such embodiments, after the array substrate 126 has been placed in the wash chamber 120, the cover or lid is placed over the wash chamber 120; the trigger may be a sensor that detects the cover or lid being placed over the wash chamber 120.

In some embodiments, use of the described washing system 100 may proceed as follows: a first wash solution is introduced into the wash chamber 120 from a fluid source 110 via the system manifold 106. An array substrate 126 is submerged in the first wash solution in the wash chamber 120. In a typical embodiment, a hybridization chamber is placed in the wash chamber 120 and then disassembled while the hybridization chamber is submerged, to provide the array substrate 126 submerged in the first wash solution in the wash chamber 120. The disassembly of the hybridization chamber while submerged allows contact of the array substrate with the first wash solution and also provides a high dilution of the hybridization solution into the first wash solution while, at the same time, not allowing the hybridization solution an opportunity to dry on the surface of the array substrate 126. An array substrate 126 placed in the washing station 102 can comprise more than one microarray, i.e. a plurality of identical or different microarrays may be supported on a single array substrate 126. The array substrate typically has gone through a hybridization process in which the array substrate has been exposed to a sample solution containing target; therefore the array subject typically has target bound to probes on the array substrate and also has material non-specifically bound to the array substrate.

At this point, a trigger signal is supplied to the program controller, e.g. by a user activating a switch 174. The program controller 142 proceeds to execute a washing protocol. Once the washing protocol begins, the subsequent steps are automatically performed, e.g. under the control of the program controller 142. Such a washing protocol includes steps described herein, including a first drain and fill step, an incubation step, a second drain and fill step, and a slow drain step.

In a first "drain and fill" step, the first wash solution is drained from the wash chamber 120, and the wash chamber 120 is automatically filled with a second wash solution from a fluid source 110 via the system manifold 106. This first "drain and fill" step typically takes no more than about 10 seconds. In various embodiments, the first drain and fill step typically takes no more than about 8 seconds, no more than about 6 seconds, no more than about 4 seconds, no more than about 3 seconds, or in certain embodiments no more than about 2 seconds. In typical embodiments, the first drain and fill step takes at least about 1 second, though in certain embodiments, the first drain and fill step takes at least about 0.5 seconds. Typically, the program controller 142 signals a drain control element 160 to remove fluid from the wash chamber 120, and the program controller 142 signals a fluid inlet control element 140 to add second wash solution to the wash chamber 120. Filling the wash chamber 120 with the second wash solution results in the array substrate being contacted with the second wash solution. In certain embodiments, the second wash solution may be the first wash solution; in some embodiments, the composition of the second wash solution may differ from that of the first wash solution. In some embodiments, the same fluid source 110 supplies both the first wash solution and the second wash solution; or, in other embodiments, they are supplied from different fluid sources 110.

In certain embodiments there typically is a delay period, e.g. an incubation, during which fluid (e.g. the second wash solution) may be circulated in the wash chamber 120 (or fluid may be slowly drained while more wash solution is slowly added). The delay period allows incubation under controlled conditions (e.g. the composition of the wash solution, the temperature, the time (duration) of the incubation, etc. are maintained at predetermined values). In particular embodiments, the controlled conditions are stringent wash conditions.

The incubation is typically followed by a second "drain and fill" step, in which the second wash solution is drained from the wash chamber 120 and the wash chamber 120 is filled with a third wash solution. This second drain and fill step typically takes no more than about 10 seconds. In various embodiments, the second drain and fill step typically takes no more than about 8 seconds, no more than about 6 seconds, no more than about 4 seconds, typically no more than about 3 seconds, or in certain embodiments no more than about 2 seconds. In typical embodiments, the second drain and fill step takes at least about 1 second, though in certain embodiments, the second drain and fill step takes at least about 0.5 seconds. In certain embodiments, the third wash solution may be the first wash solution or the second wash solution; in some embodiments, the composition of the third wash solution may differ from that of the first wash solution and/or the second wash solution. In some embodiments, the same fluid source 110 supplies both the third wash solution and the first wash solution; or, in some embodiments, the same fluid source 110 supplies both the third wash solution and the second wash solution. In other embodiments, the first wash solution, the second wash solution, and the third wash solution are each supplied from different fluid sources 110.

After a predetermined period of time, the solution in the wash chamber 120 is slowly drained (a "slow drain" step). The "slow drain" step is "slow" in that the draining of the wash chamber 120 takes a longer period of time than the draining of the wash chamber 120 in the "drain and fill" steps. The slow drain step typically takes at least 3 seconds, although in various embodiments, the slow drain step takes at least about 4 seconds, at least about 5 seconds, at least about 6 seconds, at least about 10 seconds, or at least about 12 seconds. The slow drain step typically takes about 15 seconds. The slow drain step typically takes at most about 120 seconds, although in certain embodiments it may take longer. In various embodiments, the slow drain step typically takes at most about 100 seconds, at most about 75 seconds, at most about 50 seconds, at most about 40 seconds, at most about 30 seconds, or at most about 20 seconds. The slow drain step typically also includes directing a stream of gas from the gas inlet 148 across the surface of the array substrate 126 as the wash chamber 120 is being drained. The slow drain step results in a meniscus slowly moving down the array substrate 126 as the fluid in the wash chamber 120 is slowly drained, drawing fluid off the surface of the array substrate 126. In addition, the stream of gas from the gas inlet 148 is directed across the surface of the array substrate 126 as the slow draining is occurring. The combination of the slow moving meniscus and stream of gas provides for uniform drying of the array substrate. This uniform drying in combination with the capability of carefully controlling washing conditions is provided in typical examples of the washing system 100 described herein. In an embodiment, the stream of gas continues to be directed across the surface of the array substrate after the slow drain step is completed; in such an embodiment, in addition to aiding in drying the surface of the array substrate, the stream of gas typically maintains a positive pressure of the inert gas to reduce environmental contamination of the array substrate. For example, airborne contaminants would tend to be reduced around the array substrate during use as long as the relatively inert gas flowing from the gas inlet tended to exclude ambient air (which may carry environmental contaminants) from around the array substrate.

As used herein with regard to draining and filling the wash chamber, draining means a process of removing a fluid (e.g. a wash solution) from the wash chamber until substantially all of the fluid is removed from the chamber, e.g. until no more than about 20% of the total amount of the fluid in the chamber just prior to the draining process remains in the chamber, further e.g. until no more than about 10% , about 5%, about 2%, or about 1% of the total amount of the fluid in the chamber just prior to the draining process remains in the chamber. Filling means a process of supplying a fluid (e.g. a wash solution) to the wash chamber until substantially all of the microarray is submerged in the fluid, e.g. until at least about 80% of the total number of spots on the microarray are submerged in the fluid; typically, at least about 98%, or at least about 100% of the total number of spots on the microarray are submerged in the fluid. Typically, the entire array substrate will be submerged by the filling process, but this need not always be the case, especially in embodiments in which the spots of the microarray are disposed on only a portion of the array substrate (e.g. the portion intended to be closest to the bottom of the wash chamber during use).

During use of the washing system 100, the program controller 142 receives input signals from various sensors (e.g. temperature sensors 170, fluid level sensors 172) and outputs various control signals to control elements (e.g. to heating elements, to valve controllers, etc.). The program controller 142 may be programmable by the user and/or may respond to input from the user to select parameters of operation (e.g. wash conditions). The process may include one or more optional additional wash steps, e.g. to rinse the array substrate, e.g. with a fourth wash solution.

In some embodiments, the fluid inlet 136 is adapted to spray the fluid across the surface of the array substrate 126 and/or across the interior surface of the wash chamber 120. This may wash off residual fluid clinging to these surface(s) after the wash chamber 120 has been drained. In some embodiments, the drain 130 may be held open for a brief period (e.g. typically less than about a second) while the surface of the array substrate 126 and/or the interior surface of the wash chamber 120 is sprayed with fluid, thereby draining the initial portion of fluid sprayed into the wash chamber 120. After the brief period, the drain 130 is shut, thereby proceeding with filling the wash chamber 120 with the fluid, e.g. the second wash solution. In such embodiments, the action of the drain 130 and fluid inlet 136 are typically coordinated and controlled by the program controller 142.

Accordingly, in certain embodiments, the present invention provides methods of washing an array substrate. In particular embodiments, the methods include disassembling a hybridization chamber while the hybridization chamber is submerged in a first wash solution. The first wash solution typically is in a wash chamber that is sized to receive the hybridization chamber. Disassembling the hybridization chamber while the hybridization chamber is submerged in the wash solution in the wash chamber provides for (or results in) the first wash solution contacting the array substrate.

Contacting the array substrate with the first wash solution quickly dilutes the fluid contacting the array substrate (e.g. the fluid held in the hybridization chamber) into the first wash solution. Prior to the disassembling, the hybridization chamber retains a volume "Vhyb" of fluid (e.g. hydridization buffer) in contact with the array surface; a volume "Vwash" of first wash fluid is held in the wash chamber (when the array substrate is in place in the wash chamber). A dilution factor may be calculated as Vwash/Vhyb. In particular embodiments of a method according to the present invention, this dilution factor is at least 25, at least 50, at least 75, at least 100, at least 150, at least 200, or at least 300.

The array substrate typically sits in the wash chamber on one edge of the array substrate, in a generally upright configuration (see, e.g., Figure 1). The array substrate is typically maintained in contact with the first wash solution for as long as desired, e.g. up to about 30 seconds, up to about 1 minute, up to about 2 minutes, up to about 5 minutes, or even longer. The array substrate is typically maintained in contact with the first wash solution for a time of at least about three seconds, more typically at least about five seconds, still more typically at least about twenty seconds.

Typically, a "trigger" signal is provided to a program controller which controls the wash chamber and which also controls other elements in operable relation to the wash chamber, e.g. wash fluid source(s), temperature modulating means (e.g. heating means and/or cooling means), etc. The trigger signal typically is initiated by a user, or it may be provided as a consequence of some status detected by the program controller, e.g. an array substrate being placed in the wash chamber or a cover being placed over the wash chamber. As an example, the trigger signal may be produced as the result of a button pressed by the user, such as a keyboard entry to indicate that the hybridization chamber has been disassembled and/or the array substrate is in contact with the first wash solution (e.g. is submerged in the first wash solution). The trigger signal results in a series of operations being performed automatically, including draining the wash chamber and filling the wash chamber in the first drain and fill step, maintaining the controlled conditions during the incubation, draining the wash chamber and filling the wash chamber in the second drain and fill step, and draining the wash chamber in the slow drain step.

In accordance with the method of the invention, the draining of the first wash solution should be rapid and should be quickly followed by the filling of the wash chamber with the second wash solution, which should also be rapid. As used in the context of draining or filling a wash solution, "rapid" means that the draining (or filling) of the wash chamber should take less than about 10 seconds, typically less than about 5 seconds, more typically less than about 3 seconds, still more typically less than about 2 seconds. The draining (or filling) of the wash chamber typically takes at least about a half second, although in particular embodiments, it may take as little as one third of a second, or even as little as one quarter of a second. Filling the wash chamber occurs quickly following the draining step, e.g. within less than about 15 seconds, less than about 10 seconds, less than about 5 seconds, or less than about 3 seconds. Similarly, in accordance with the method of the invention, the draining of the second wash solution should be rapid and should be quickly followed by the filling of the wash chamber with the third wash solution, which should also be rapid.

In certain embodiments, filling the wash chamber with the second wash solution may start slightly before the draining of the first wash solution is complete. In some embodiments, a small portion of the first wash solution (e.g. less than about 20% of the total amount of first wash solution in the wash chamber just prior to the initiation of the draining of the wash chamber; further e.g. less than about 10%, or less than about 5%, or less than about 2%, or less than about 1%, of the total amount of first wash solution in the wash chamber just prior to the initiation of the draining of the wash chamber) remains in the wash chamber when the filling of the wash chamber with the second wash solution starts. In certain embodiments, the draining of the wash chamber continues after the filling begins; in this manner, small amounts of the first wash solution which remain in the wash chamber may be washed out by the initial portion of second wash solution entering the wash chamber. In particular embodiments, the second wash solution is directed across the surface of the array substrate as the second wash solution enters the wash chamber, e.g. the second wash solution may be sprayed into the wash chamber.

The second wash solution is maintained in contact with the array substrate for a predetermined period of time. Also, in some embodiments, the temperature is maintained within a specified range. In particular embodiments, the second wash solution is maintained in contact with the array substrate under stringent washing conditions. The stringent washing conditions typically are selected to increase the specificity of binding which results in improved signal to noise achieved during subsequent scanning of the microarray.

Representative stringent washing conditions are disclosed herein or are known in the art, or may be determined by routine experimentation given the disclosure herein. Wash conditions typically become more stringent with lower salt concentration and/or higher temperature of wash solution. The washing conditions typically are selected to result in removal of non-specifically bound material from the substrate.

In some embodiments, a method in accordance with the present invention includes creating a fluid current in the wash solution in the wash chamber to aid in mixing of the wash solution, especially mixing of the solution directly adjacent the microarray. The current may be created by any suitable means, e.g. having a mechanical stirring means in the wash chamber, further e.g. recirculating the fluid by removing a portion of the fluid from the wash chamber and reintroducing the removed fluid into the wash chamber. In an embodiment, a fluid current is created in the wash solution by draining a portion of the wash solution from the chamber and adding fresh wash solution to the chamber to make up for that drained. In some embodiments, from about 2% to about 5% of the total wash solution in the chamber is drained (and replenished) about every 5 seconds, or about every 10 seconds, or about every 20 seconds, or about every 30 seconds, or about every 60 seconds. This creates enough of a fluid current in the wash chamber to result in a well mixed wash solution as non specific signal is washed from the array surface. This method of slowly adding fluid from a fluid source may also be used to control the temperature in embodiments in which the fluid is heated or cooled to a desired temperature and then added to the wash chamber.

A method in accordance with the invention may include one or more optional additional wash steps, e.g. with a third, fourth or fifth wash solution; such additional wash step(s) may serve to thoroughly rinse the array substrate or may be used for other specific reasons. For example, the last wash solution may be selected to better wet the surface or to adjust the stringency of the wash, or to dry easier. In particular embodiments, the method may include one or more optional intervening wash step(s) after the array substrate is contacted with the second wash solution but before the final "slow drain" step. Each optional wash step includes a rapid drain and a rapid fill with the desired wash solution. Such wash solutions may be selected to remove the second wash solution and to provide for uniform drying of the array surface preparatory to interrogating the microarray.
Similarly, in some embodiments, the method may include one or more optional intervening wash steps after the array substrate is contacted with the first wash solution and before the wash chamber is filled with the second wash solution. Each optional wash step includes a rapid draining of the wash chamber and a rapid fill of the wash chamber with the desired wash solution. Such wash solutions are selected to remove the first wash solution. Such wash solutions may be preheated to a specified temperature prior to filling the wash chamber and may serve to help prepare the array substrate for being contacted with the second wash solution.

A final draining step (the "slow drain" step) occurs after the array substrate is contacted with the second wash solution, or, in some embodiments, after the array substrate is contacted with a wash solution from an additional optional wash step (e.g. a third, fourth or fifth wash solution). The final draining step includes slowly draining the wash chamber, such that in certain embodiments the draining takes at least about 5 seconds, or at least about 10 seconds, or at least about 15 seconds, or at least about 20 seconds, or more. The time taken to drain the chamber in the slow drain step is typically determined taking into consideration a number of factors, including the surface energy of the array substrate, the composition of the wash solution (e.g. surfactant and salt content) and the temperature. In typical embodiments, a stream of gas is directed across the array surface as the final draining is occurring. It was observed that, during the final draining, the liquid in contact with the array surface typically formed a meniscus that moved down the array surface during the slow draining. Without limiting the invention in any way, it is believed that this meniscus aids in drawing fluid off the array surface, thereby aiding in drying the array surface. Typically, the drain rate is selected to be slow enough to keep the meniscus intact during the slow drain process. Typically this is between 10 and 20 seconds. By controlling the rate at which the meniscus moves down the array surface, we minimize the formation of droplets that remain on the surface. This speeds the drying and minimizes artifacts from drying that can be detected during the measurement (scanning of the microarray). Any suitable gas may be used for providing a stream of gas across the surface of the array substrate. Typically, the stream of gas also aids in drying the array surface. In some embodiments, the gas may be any dry gas, such as dry nitrogen, dry air, or the like. The stream of gas is typically focused to pass most directly over the meniscus that is formed during the final draining step.

After the final draining step (the "slow drain" step), the surface of the array substrate is typically dry. A stream of gas may continue to be directed across the array substrate to keep the array substrate in a protected environment until the user is ready to remove it from the wash chamber. In circumstances in which the array substrate is not quite dry when the slow drain step is complete, the continuing stream of gas also aids in drying the array substrate. The stream of gas may also provide protection from environmental contaminants by excluding the ambient air from the wash chamber. After the slide is removed from the wash chamber, it is typically interrogated by any suitable means. Methods of interrogating microarrays, e.g. by fluorescent scanning, are well known in the art and need not be described here. Wash artifacts resulting from undesired residues (e.g. salts, detergents, other materials) remaining on the surface of the array substrate can complicate the scanning process. The artifacts typically cause spurious signal, or noise, in the scanning process, making results difficult to obtain or interpret properly. In particular embodiments, methods (and/or apparatus) according to the present invention may reduce "wash artifacts" on the surface of array substrates.

The controlled conditions afforded by the method of the present invention provide for increased uniformity in results when performing array hybridization experiments. The controlled conditions reduce the number of uncontrolled variables affecting hybridization experiments using microarrays, such as durations of individual washing steps, rinsing steps, temperatures during the various steps, etc. The methods also reduce the skill level needed by the user performing such assays, and reduce the interaction needed by the user. The user no longer needs to perform a laborious and time-consuming washing protocol by hand - the washing may now be set up and then left to automatically happen according to a specified washing protocol. Since the wash chamber is separate from the hybridization apparatus (where the hybridization reaction is performed), the present method allows the hybridization apparatus to be used for more hybridization reactions while microarrays which have already undergone the hybridization reactions are washed, thereby potentially increasing total possible throughput of the hybridization apparatus.

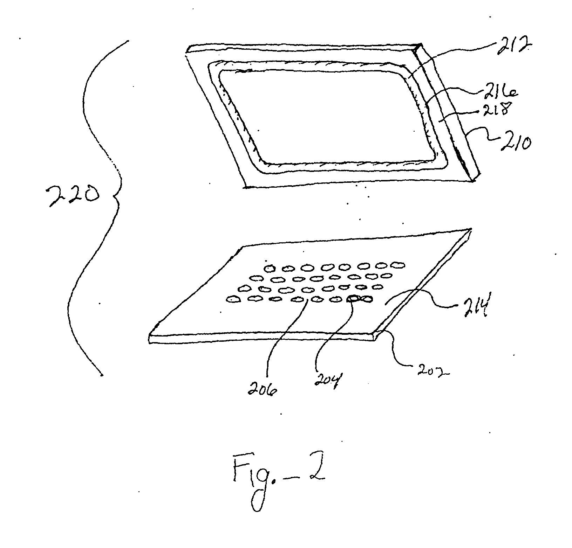

As used herein, a hybridization chamber is a device that retains the sample solution (e.g. solution containing the "target") in contact with the microarray and the array substrate to allow binding to occur during the hybridization reaction. The hybridization chamber typically defines an interior space that is adapted to retain the sample solution in contact with the microarray, and may also include ports for allowing entry and/or exit of fluids to the interior space and for venting of the interior space. The hybridization chamber may be any structure that encloses an interior space and is adapted to retain a fluid in contract with a surface of a microarray. In a particular embodiment, the hybridization chamber may be as illustrated in Figure 2, wherein an array substrate 202 has a plurality of spots 204 arranged in an array format on a surface of the array substrate 202. Each spot 204 may have one or more target probes. In particular embodiments, the array substrate 202 typically will have at least about 50 spots, or at least about 100 spots, or at least about 250 spots. Some embodiments will have up to about 1000 spots, or up to about 10,000 spots, or up to about 100,000 spots, or even more spots. The spots 204 may be separated by intervening areas 206 disposed between each spot 204, or the spots may be contiguous with each other. Each spot may have a different target probe(s) from any other spot, or there may be multiple spots that have the same target probe(s). The target probes are typically biomolecules, such as polynucleotides or polynucleotide analogues, polypeptides or polypeptides analogues, or any other molecules that may exhibit binding for target molecules.

Continuing with embodiment shown in Figure 2, a cover 210 having a joining surface 212 is shown. The joining surface 212 is adapted to mate to a complementary surface 214 of the array substrate 202. In the illustrated embodiment, the joining surface 212 is a surface of a compressible material 216 formed on a support 218. Typical examples of such structures are disclosed in U.S. patent application publication US 2003/0231985, filed on June 14, 2002 by Schleifer. The cover 210 is adapted to be aligned adjacent the array substrate 202, with the joining surface 212 contacting the complementary surface 214 of the array substrate 202 to form a fluid tight seal. In an embodiment, a compressible material 216 is formed on the surface of the array substrate 202 to give the complementary surface 214. In some embodiments, the hybridization chamber comprises a gasket disposed between the array substrate and the cover to provide for a fluid tight seal. In certain embodiments, the hybridization chamber may comprise one or more inlets, outlets, or vents, or combinations thereof, as necessary depending on the desired features or design of the system. In some embodiments, the cover may define a depression, a well, or other like structure adapted to hold a fluid. Similarly, in some embodiments, the array substrate may define a depression, a well, or other like structure adapted to hold a fluid. In such embodiments, when the cover is disposed in position adjacent the array substrate, the depression, well, or other structure is enclosed and forms the interior space within the hybridization chamber for retaining a fluid in contact with the array surface.

In the embodiment shown in Figure 2, the hybridization chamber 220 is adapted to be disassembled to allow access to the surface of the microarray (e.g. the spots 204). As pictured, the array substrate 202 is an integral part of the hybridization chamber 220, i.e. forming part of the structure that retains the fluid in contact with the surface of the microarray. In another embodiment, the hybridization chamber may be a container that defines a space for holding the array substrate and for retaining a fluid in contact with the microarray surface; in such embodiments, the array substrate does not form an integral part to the hybridization chamber and is separable from the parts of the hybridization chamber.

In certain embodiments, the hybridization chamber might be too large to place into the wash chamber. In certain other embodiments, the hybridization chamber may not be adapted to be easily disassembled while submerged in the wash chamber, e.g. when the hybridization is performed with a cover slip, as according to some typical microarray systems. In some embodiments (such as those described early in this paragraph), the hybridization chamber is disassembled prior to placing the array substrate into the wash chamber. In such embodiments, disassembling the hybridization chamber is done in a separate container in a wash solution (e.g. a suitable buffer), and then the array substrate is quickly transferred to the wash chamber. Such embodiments may still benefit from the subsequent automation.

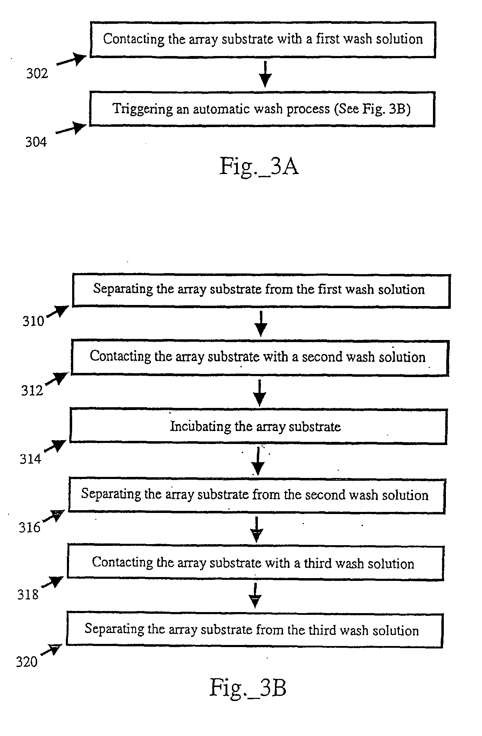

Accordingly, in certain embodiments, the present invention provides methods of washing an array substrate. Figure 3 outlines a method in accordance with the present invention. The steps shown in Figure 3A include contacting the array substrate with a first wash solution 302 and triggering an automatic wash process 304. Figure 3B outlines an embodiment of an automatic wash process in accordance with the present invention. In particular embodiments, the methods include disassembling a hybridization chamber while the hybridization chamber is submerged in a first wash solution. Prior to disassembly, the hybridization chamber retains a volume "Vhyb" (the "retained volume") of fluid (e.g. hydridization buffer) in contact with the array substrate. During the disassembly, the hybridization chamber is submerged in a volume "Vwash" (the "wash volume") of first wash fluid. Disassembling the hybridization chamber while the hybridization chamber is submerged in the first wash solution provides for (or results in) the first wash solution contacting the array substrate. Contacting the array substrate with the first wash solution 302 quickly dilutes the fluid contacting the array substrate (e.g. the fluid held in the hybridization chamber) into the first wash solution. A dilution factor may be calculated as Vwash/Vhyb. In particular embodiments, this dilution factor is at least 25, at least 50, at least 75, at least 100, at least 150, at least 200, or at least 300. In various embodiments, the dilution factor may be up to 500, up to 1000, up to 5000, up to 10,000, or even more.

The array substrate is typically maintained in contact with the first wash solution for as long as desired, e.g. up to about 30 seconds, up to about 1 minute, up to about 2 minutes, up to about 5 minutes, or even longer. The array substrate is typically maintained in contact with the first wash solution for a time of at least about three seconds, more typically at least about five seconds, still more typically at least about twenty seconds.

Once the array substrate has been contacted with the first wash solution, a "trigger" signal is provided to trigger an automatic wash process. As an example, the trigger signal may be produced as the result of a button pressed by the user, such as a keyboard entry to indicate that the hybridization chamber has been disassembled and/or the array substrate is in contact with the first wash solution (e.g. is submerged in the first wash solution). The trigger signal results in a series of operations being performed automatically, as are listed in Figure 3B, wherein the automatic wash process includes: separating the array substrate from the first wash solution 310, contacting the array substrate with a second wash solution 312, incubating the array substrate 314 in the second wash solution under controlled conditions (e.g. of time and temperature), separating the array substrate from the second wash solution 316, contacting the array substrate with a third wash solution 318, and separating the array substrate from the third wash solution 320. In particular embodiments, a stream of gas is directed over the array substrate as the step of separating the array substrate from the third wash solution is occurring.

Separating the array substrate from the first wash solution 310 is rapid; in typical embodiments, the separating takes less than about 10 seconds, typically less than about 5 seconds, more typically less than about 3 seconds. Separating the array substrate from the first wash solution 310 typically takes at least about a half second, although in particular embodiments, it may take as little as one third of a second, or even as little as one quarter of a second. In typical embodiments, separating the array substrate from the first wash solution results 310 in most (generally more than 60%, typically more than 80%, more typically more than 90%, still more typically more than 95%) of the first wash solution that is contacting the substrate being removed from being in contact with the array substrate. In some embodiments, separating the array substrate from the first wash solution 310 results in the array substrate being separated from up to about 98%, up to about 99%, or about 100% of the first wash solution.

Contacting the array substrate with the second wash solution 312 occurs quickly following the separation of the array substrate from the first wash solution, e.g. within less than about 15 seconds, less than about 10 seconds, less than about 5 seconds, or less than about 3 seconds. In certain embodiments, the second wash solution may be the first wash solution; in other embodiments, the second wash solution differs from the first wash solution.

Incubating the array substrate 314 is performed under controlled conditions. The conditions that are controlled typically include one or more of temperature, composition of second wash solution, duration (time) of incubation, flow rate of second wash solution, rate of mixing during the incubation, rates of removal and/or addition of second wash solution, or the like. The controlled conditions typically include stringent washing conditions. Incubating the array substrate 314 is typically maintained for a duration of at least about 10 seconds, more typically about 15 seconds, at least about 30 seconds, or at least about 1 minute. Incubating the array substrate is typically maintained for a duration of up to about 5 minutes, up to about 10 minutes, up to about 40 minutes, up to about 100 minutes, or up to about 200 minutes, or up to about 600 minutes, or even more. In some embodiments, during the incubating step the second wash solution is mixed or stirred; this stirring or mixing may be performed by mechanically stirring the second wash solution, by recirculating the wash solution (e.g. using a recirculating pump), by removal of a portion of the second wash solution and addition of fresh second wash solution, or by any other effective means of mixing or stirring.

Separating the array substrate from the second wash solution 316 is rapid; in typical embodiments, the separating takes less than about 10 seconds, typically less than about 5 seconds, more typically less than about 3 seconds. Separating the array substrate from the second wash solution typically takes at least about a half second, although in particular embodiments, it may take as little as one third of a second, or even as little as one quarter of a second. In typical embodiments, separating the array substrate from the second wash solution results in most (generally more than 60%, typically more than 80%, more typically more than 90%, still more typically more than 95%) of the second wash solution that is contacting the substrate being removed from being in contact with the array substrate. In some embodiments, separating the array substrate from the second wash solution results in the array substrate being separated from up to about 98%, up to about 99%, or about 100% of the second wash solution.

In typical embodiments, contacting the array substrate with the third wash solution 318 occurs quickly following the separation of the array substrate from the second wash solution, e.g. within less than about 15 seconds, less than about 10 seconds, less than about 5 seconds, or less than about 3 seconds. However, in some embodiments, there may be one or more optional wash steps after separating the array substrate from the second wash solution: the optional wash step includes contacting the array substrate with a fourth wash solution and then separating the array substrate from the fourth wash solution. In such an embodiment, contacting the array substrate with the third wash solution 318 occurs quickly following the separation of the array substrate from a fourth (not second) wash solution. To render the description clear, the phrase "after the array substrate is separated from a previous wash solution" references embodiments in which the "previous" wash solution is the second wash solution (e.g. embodiments lacking the optional wash step with a fourth wash solution) and also embodiments in which the "previous" wash solution is the fourth wash solution (e.g. embodiments including the optional wash step with a fourth wash solution). "Previous", therefore, indicates the wash solution that was separated from the array substrate just prior to the contacting with the third wash solution.

The array substrate is typically maintained in contact with the third wash solution for as long as desired, e.g. up to about 30 seconds, up to about 1 minute, up to about 2 minutes, up to about 5 minutes, or even longer. The array substrate is typically maintained in contact with the first wash solution for a time of at least about three seconds, more typically at least about five seconds, still more typically at least about twenty seconds. In certain embodiments, the third wash solution may be the first wash solution; in other embodiments, the third wash solution may be the second wash solution; in still other embodiments, the third wash solution differs from the first wash solution and the second wash solution.

Separating the array substrate from the third wash solution 320 is relatively slow (compared to the earlier separation steps, i.e. compared to separating the array substrate from the first or second wash solutions); in typical embodiments, the separating takes at least 3 seconds, although in various embodiments, the separating takes at least about 4 seconds, at least about 5 seconds, at least about 6 seconds, at least about 10 seconds, or at least about 12 seconds. Separating the array substrate from the third wash solution 320 typically takes at most about 120 seconds, although in certain embodiments it may take longer. In various embodiments, separating the array substrate from the third wash solution typically takes at most about 100 seconds, at most about 75 seconds, at most about 50 seconds, at most about 40 seconds, at most about 30 seconds, or at most about 20 seconds. In certain embodiments, separating the array substrate from the third wash solution 320 takes at least about 3 times as long as separating the array substrate from the first wash solution; in some embodiments, separating the array substrate from the third wash solution takes at least about 5 times, or at least about 10 times, or at least about 15 times, or at least about 20 times, as long as separating the array substrate from the first wash solution. In typical embodiments, separating the array substrate from the third wash solution results in the array substrate being separated from up to about 98%, up to about 99%, or about 100% of the third wash solution.

In particular embodiments, a stream of gas is directed over the array substrate as the step of separating the array substrate from the third wash solution is occurring. The gas is typically a chemically inert gas (i.e. the gas does not react chemically with the array substrate). In certain embodiments, the gas is treated to remove chemically reactive components from the gas, e.g. ozone may be removed from the gas by any suitable process. The gas is typically used as a drying gas (e.g. to remove moisture from the array substrate, or to aid in drying the array substrate). The gas may also be used as a purging gas (e.g. to remove ambient gas from the vicinity of the array substrate). In some embodiments, the stream of gas is applied during other steps in the process as well as during the step of separating the array substrate from the third wash solution, e.g. the stream of gas may be applied during one or more of: separating the array substrate from the first wash solution, contacting the array substrate with a second wash solution, incubating the array substrate in the second wash solution under controlled conditions, separating the array substrate from the second wash solution, and/or contacting the array substrate with a third wash solution. The gas is typically used as a drying gas while separating the array substrate from the third wash solution, and the relatively slow separating of the array substrate from the third wash solution aids in the drying by shedding fluid from the surface of the array substrate.

In certain embodiments, a method in accordance with the present invention provides washed and dried array substrates using an automated process as described. A method of washing an array substrate in accordance with the present invention typically proceeds in the order described herein. In certain embodiments, the steps may occur in a different order, where doing so maintains the general purpose of washing the array substrates. In some embodiments, there may be an additional step that occur automatically as a result of the trigger signal being provided, e.g. an additional incubation step, further e.g. one or more additional wash steps (separation from a wash solution followed by contacting with another wash solution), or other steps as may be desired depending on experimental design considerations.

The practice of the present invention will employ, unless otherwise indicated, conventional techniques of synthetic organic chemistry, biochemistry, molecular biology, and the like, which are within the skill of the art. Such techniques are explained fully in the literature.

The description herein is put forth so as to provide those of ordinary skill in the art with a complete disclosure and description of how to perform the methods and use the apparatus disclosed and claimed herein. Efforts have been made to ensure accuracy with respect to numbers (e.g., amounts, temperature, etc.) but some errors and deviations should be accounted for. Unless indicated otherwise, parts are parts by weight, temperature is in °C and pressure is at or near atmospheric. Standard temperature and pressure are defined as 20 °C and 1 atmosphere.

While the foregoing embodiments of the invention have been set forth in considerable detail for the purpose of making a complete disclosure of the invention, it will be apparent to those of skill in the art that numerous changes may be made in such details without departing from the scope of the invention. Accordingly, the invention should be limited only by the following claims.

All patents, patent applications, and publications mentioned herein, US 10/864,229 from which this application claims priority and the accompanying abstract are hereby incorporated by reference in their entireties.

## Claims

1. Apparatus for contacting an array substrate (126) with a fluid, the apparatus comprising
a housing defining a wash chamber (120),
a fluid inlet (136) in fluid communication with the wash chamber,
a drain (130) in fluid communication with the wash chamber,
a gas inlet (148) adapted to direct a stream of gas over a surface of the array substrate, and
a program controller (142) in operable relation to the wash chamber, the program controller operable to perform a washing protocol which includes automatically filing the wash chamber with said fluid.

2. Apparatus as claimed in claim 1, further comprising a drain control element (160) in operable relation to the drain (130), the drain control element adapted to provide at least two different rates of fluid removal from the wash chamber (120).

3. Apparatus as claimed in claim 2, wherein the drain control element (160) is in operable relation to the program controller (142).

4. Apparatus as claimed in claim 1, 2 or 3, wherein the drain (130) is adapted to provide at least two different rates of fluid removal from the wash chamber (120).

5. Apparatus as claimed in any preceding claim, wherein a fluid inlet control element (140) is in operable relation to the fluid inlet (136) and/or to the program controller (142).

6. Apparatus as claimed in claim 6, wherein the fluid inlet control element (140) is a manifold (106) adapted to receive fluid from a plurality of fluid sources and to direct fluid from at least one of the fluid sources to the fluid inlet (136), the manifold comprising a plurality of valves in operable relation to the program controller (142).

7. Apparatus as claimed in any preceding claim, wherein the fluid inlet (136) is adapted to spray said fluid on one or more of the array substrate (126) and an interior surface of the wash chamber (120), the fluid inlet adapted to be in fluidic communication with a fluid source.

8. Apparatus as claimed in any preceding claim, wherein a gas inlet control element is in operable relation to the gas inlet (148).

9. Apparatus as claimed in any preceding claim, wherein a temperature control element is in operable relation to the wash chamber (120) and is adapted to control the temperature of said fluid.

10. Apparatus as claimed in any preceding claim, further comprising a high liquid level sensor (172) in operable relation to the wash chamber (120) adapted to detect when the chamber is full or substantially full.

11. Apparatus as claimed in any preceding claim, further comprising a low liquid level sensor (172) in operable relation to the wash chamber (120) adapted to detect when the chamber is empty or nearly empty.

12. Apparatus as claimed in any preceding claim, wherein the wash chamber (120) is sized to receive a hybridization chamber, the wash chamber having wash volume that is at least 25 times the retained volume of the hybridization chamber.

13. Apparatus as claimed in any preceding claim, further comprising a sensor adapted to indicate the presence of said array substrate (126) in the wash chamber (120).

14. A method of washing an array substrate (126), the method comprising
placing the array substrate (126) in a wash chamber (120),
triggering a first drain and fill step,
automatically performing a second drain and fill step, and
automatically performing a slow drain step.

15. A method as claimed in claim 14, wherein placing the array substrate (126) comprises placing a hybridization chamber in the wash chamber (120), and then disassembling the hybridization chamber while the hybridization chamber is submerged in a first wash solution in the wash chamber.

16. A method as claimed in claim 15, wherein the hybridization chamber has a retained fluid in contact with the array substrate (126) and disassembling the hybridization chamber results in diluting the retained fluid into the first wash solution by a factor of at least 25.

17. A method as claimed in any of claims 14 to 16, wherein triggering comprises providing a triggering signal to a program controller (142) in operable relation to the wash chamber (120), wherein the program controller executes an automatic washing protocol comprising a sequence of operations including the first drain and fill step, the second drain and fill step, and the slow drain step.

18. A method as claimed in claim 17, wherein the program controller (142) is programmed to perform a predetermined washing protocol.

19. A method as claimed in any of claims 14 to 18, further comprising, prior to triggering a first drain and fill step, filling the wash chamber (120) with a first wash solution.

20. A method as claimed in claim 19, wherein the first drain and fill step comprises
draining the first wash solution from the wash chamber (120) and automatically filling the wash chamber with a second wash solution,
wherein the first drain and fill step takes less than about 10 seconds to complete; and/or
wherein the second drain and fill step comprises draining a second wash solution from the wash chamber and automatically filling the wash chamber with a third wash solution,
wherein the second drain and fill step takes less than about 10 seconds to complete.

21. A method as claimed in claim 20, wherein draining the first wash solution continues briefly after filling the wash chamber (120) with the second wash solution starts and/or draining the second wash solution continues briefly after filling the wash chamber with the third wash solution starts.

22. A method as claimed in any of claims 14 to 21, further comprising, after the first drain and fill step, incubating the array substrate (126) under controlled conditions.

23. A method as claimed in any of claims 14 to 22, further comprising one or more additional wash steps prior to automatically performing the slow drain step.

24. A method as claimed in any of claims 14 to 23, wherein the slow drain step further comprises directing a stream of gas across the surface of the array substrate (126) as the wash chamber (120) is being drained.

25. A method as claimed in any of claims 14 to 24, wherein the slow drain step comprises draining the wash chamber (120), the slow drain step taking at least about 3 seconds and at most about 120 seconds.
